# EUROPÄISCHE PATENTSCHRIFT

(11) **EP 0 662 924 B1**
(45) Veröffentlichungstag und Bekanntmachung des Hinweises auf die Patenterteilung: **15.05.1996**
(21) Anmeldenummer: 93921783.2
(22) Anmeldetag: 29.09.1993
(51) Int. Cl.: B65G 17/42, B65G 17/38

(54) **BECHERWERK**
BUCKET CONVEYOR
TRANSPORTEUR A GODETS

(30) Priorität: 30.09.1992 DE 4233552
(43) Veröffentlichungstag der Anmeldung: 19.07.1995
(73) Patentinhaber: RUD-KETTENFABRIK RIEGER & DIETZ GMBH U. CO., D-73432 Aalen (DE)
(72) Erfinder: RIEGER, Otto, Eberhard, D-73432 Aalen-Unterkochen (DE); DALFERTH, Hans, D-73433 Aalenwasseralfingen (DE); BOGDAN, Zvonimir, D-73430 Aalen-Abstgmünd (DE); ZENKER, Hartwig, D-73432 Aalen-Ebnat (DE)
(74) Vertreter: Böning, Manfred, Dr.-Ing.
(86) Internationale Anmeldenummer: DE9300927
(87) Internationale Veröffentlichungsnummer: WO9407778

(56) Entgegenhaltungen:
- DE-A- 3 503 302
- FR-A- 559 458
- FR-A- 1 574 132
- GB-A- 545 413

## Beschreibung

Die Erfindung betrifft ein Becherwerk, bei dem die Becher über Anschlußstege an einer durch Kettenbolzen miteinander verbundene Außen- und Innenlaschen aufweisenden Laschenkette befestigt sind und bei dem in Querbohrungen der Innenlaschen Lagerbuchsen für die Kettenbolzen eingepreßt sind.

Bei einem aus der DE 35 45 634 A1 bekannten Becherwerk der in Betracht gezogenen Art sind die Enden der Außenlaschen der Laschenkette beidseits einer die Enden der Innenlaschen tragenden Lagerbuchse unmittelbar auf jeweils einem Kettenbolzen gelagert. Die bekannte Anordnung vermag insofern nicht voll zu befriedigen, als die von Querbohrungen gebildeten, zur Aufnahme des Kettenbolzens dienenden Augen der Außenlaschen nicht den gleichen Durchmesser haben wie die Augen der Innenlaschen, in die die auf den Kettenbolzen gelagerten Lagerbuchsen eingepreßt sind. Die Verwendung identischer Außen- und Innenlaschen kommt bei der bekannten Lösung mithin nicht in Betracht. Hinzu kommt, daß sich die Außenlaschen lediglich auf einem ihrer eigenen Breite entsprechenden schmalen Bereich der Kettenbolzen abstützen, in dem es folglich bei einem Verzicht auf eine die Montage erschwerende Preßverbindung zwischen den Kettenbolzen und den Außenlaschen zu erhöhten Verschleißerscheinungen kommt, wenn in die Kettenbolzen im Bereich von Kettenrädern durch die Innenlaschen Drehbwegungen eingeleitet werden.

Der Erfindung liegt die Aufgabe zugrunde, ein Becherwerk der in Betracht gezogenen Art zu schaffen, das eine bequeme und schnelle Kettenmontage sowie einfache Kettenverkürzungen bzw. -verlängerungen zuläßt und bei dem die Gelenke der Ketten einfach und verschleißarm ausgebildet sind. Diese Aufgabe wird erfindungsgemäß dadurch gelöst, daß auch die Außenlaschen mit eingepreßten Lagerbuchsen ausgestattet und über letztere mit den Anschlußstegen verbunden sind. Zum Verbinden der Außen- und Innenlaschen des erfindungsgemäßen Becherwerkes können selbst dann einfache zylindrische Kettenbolzen verwendet werden, wenn die Anschlußstege mit Lagerzapfen zur Mitnahme der Becher versehen sind, da man die Lagerbuchsen der Außenlaschen doppelt, und zwar nicht nur als Lager, sondern zusätzlich als Brücke zwischen den Kettenbolzen und den Anschlußstegen nutzt. Da die Bolzen auf ihrer ganzen Länge in Buchsen gelagert sind, ist ihre Verschleißbeanspruchung ungeachtet ihrer Drehbarkeit gegenüber allen Laschen gering. Die Verwendung identischer, d.h. in größeren Stückzahlen kostengünstig herstellbarer Laschen ist möglich. Die Becher lassen sich schnell und ohne Spezialwerkzeuge montieren und demontieren.

Als besonders vorteilhaft erweist es sich, wenn die Kettenbolzen drehbar in den Lagerbuchsen sowohl der Außen- als auch der Innenlaschen gelagert sind und wenn mindestens die Lagerbuchsen für die Außenlaschen jeweils beidseits über die sie umschließenden Bohrungen vorstehen. Auf diese Weise wird nicht nur die Verschleißbeanspruchung der Kettenbolzen im Bereich der Außenlaschen reduziert, sondern auch die Kippfestigkeit der lose auf den Kettenbolzen gelagerten Außenlaschen erhöht.

Die Erfindung wird im folgenden anhand der beigefügten Zeichnung näher erläutert. Es zeigen:
Fig. 1 teilweise im Schnitt einen mit den Rücken von Bechern verbundenen Abschnitt einer ersten Laschenkette,
Fig. 2 teilweise im Schnitt einen mit den Rücken von Bechern verbundenen Abschnitt einer zweiten Laschenkette,
Fig. 3 teilweise im Schnitt einen mit den Rücken von Bechern verbundenen Abschnitt einer dritten Laschenkette,
Fig. 4 eine Abdichtungsmöglichkeit für die Lagerbuchsen der in Fig. 1 dargestellten Außen- und Innenlaschen,
Fig. 5 eine modifizierte Abdichtungsmöglichkeit und
Fig. 6 eine besonders einfache Abdichtungsmöglichkeit der die Kettenbolzen umschließenden Lagerbuchsen.

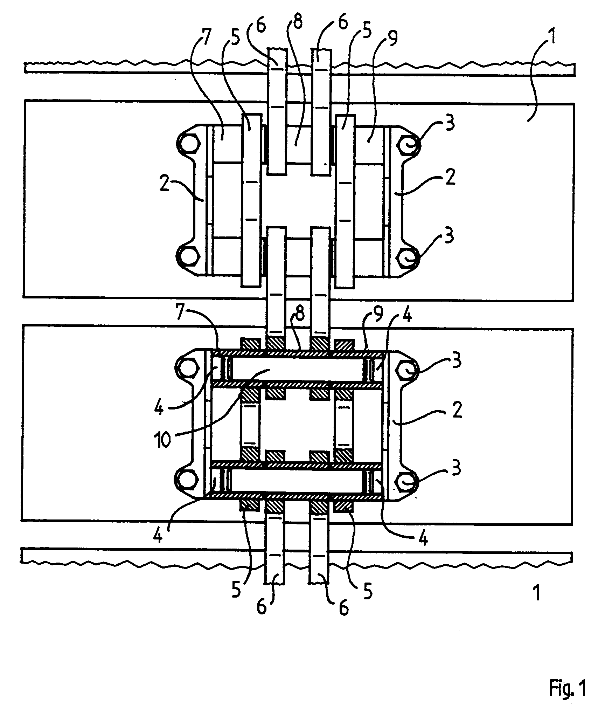

In Figur 1 sind mit 1 zwei aufeinanderfolgende Becher eines Laschenketten-Becherwerkes bezeichnet. Zum Verbinden der Becher 1 mit der Laschenkette dienen winkelförmige Anschlußstege 2, die mit Hilfe von Schrauben 3 mit der Becherrückwand verschraubt sind. Jeder der Anschlußstege 2 ist mit zwei im Abstand voneinander angeordneten Lagerzapfen 4 versehen, über die die Becher 1 an der Laschenkette aufgehängt sind. Die Laschenkette besteht im dargestellten Fall aus jeweils paarweise angeordneten Außenlaschen 5 und Innenlaschen 6, in deren von Querbohrungen gebildeten Augen Lagerbuchsen 7 bis 9 eingepreßt sind. Die Lagerbuchsen 7 bis 9 haben den gleichen Außendurchmesser, so daß es möglich ist, identische Außen- und Innenlaschen 5,6 zu verwenden. Sämtliche Lagerbuchsen 7,8 und 9 umschließen im Laufsitz, d.h. mit entsprechendem Spiel, einen Kettenbolzen 10, der folglich im Bereich der Lagerbuchsen 7 bis 9 schwimmend gelagert ist. Wie man insbesondere aus dem unteren Teil der Figur 1 entnehmen kann, bilden die Lagerbuchsen 7 und 9 Brücken zwischen den Lagerzapfen 4 und dem Kettenbolzen 10, wobei das Spiel zwischen den Lagerzapfen 4 und den Lagerbuchsen 7 und 9 größer ist als das Spiel zwischen den Kettenbolzen 10 und den Lagerbuchsen 7 bis 9.

Die Bechermontage erweist sich bei einem Becherwerk der beschriebenen Art als ausgesprochen einfach. Die Becher 1 können als mit einem Anschlußsteg 2 bereits vormontierte Einheiten angeliefert werden. Die Laschenkette besteht aus durch Zusammenstecken vormontierten Teilen. Beim Verbinden der Becher 1 mit der fertig montierten Kette werden die Lagerzapfen 4 der bereits an den Bechern vormontierten Anschlußstege 2 in die für sie vorgesehenen Lagerbuchsen 7 gesteckt. Anschließend steckt man den jeweils zweiten zur Befestigung erforderlichen Anschlußsteg 2 in die entsprechende Lagerbuchse 9 und verschraubt den zweiten Anschlußsteg 2 mit der Becherrückwand.

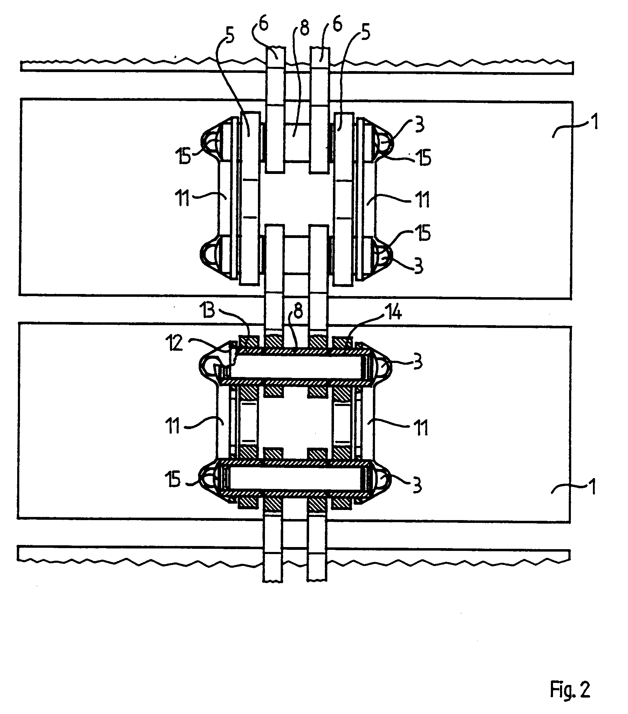

In Fig. 2 sind der Ausführungsform gemäß Fig. 1 entsprechende Teile mit den gleichen Bezugszeichen versehen wie in Fig. 1. Zum Verbinden der Becher 1 mit der Laschenkette dienen hier modifizierte Anschlußstege 11, die wiederum mit Hilfe von Schrauben 3 an der jeweiligen Becherrückwand festgeschraubt sind. Jeder der Anschlußstege 11 weist zwei im Abstand voneinander angeordnete Bohrungen 12 auf, in denen die jeweils äußeren Enden von in die Augen der Außenlaschen 5 eingepreßten Lagerbuchsen 13,14 gelagert sind. Auch in diesem Falle haben die Lagerbuchsen 13,14 die gleichen Außendurchmesser wie die Lagerbuchsen 8 der Innenlaschen 6, so daß identische Außen- und Innenlaschen 5,6 verwendet werden können. Die Kettenbolzen 10 sind wie bei der zuerst beschriebenen Ausführungsform schwimmend in den Lagerbuchsen 8,13,14 gelagert, wobei auch hier das Spiel zwischen den Kettenbolzen 10 und den Lagerbuchsen 8,13,14 kleiner ist als das Spiel zwischen den Lagerbuchsen 13,14 und den Bohrungen 12, so daß eine Belastung der Anschlußstege 11 durch in der Kette entstehende Zugkräfte nicht in Betracht kommt. Die nach außen gerichteten Öffnungen der Lagerbuchsen 13,14 der Außenlaschen 5 sind mittels Stopfen 15 verschlossen, die das Eindringen von Schmutz in die Buchsenenden verhindern.

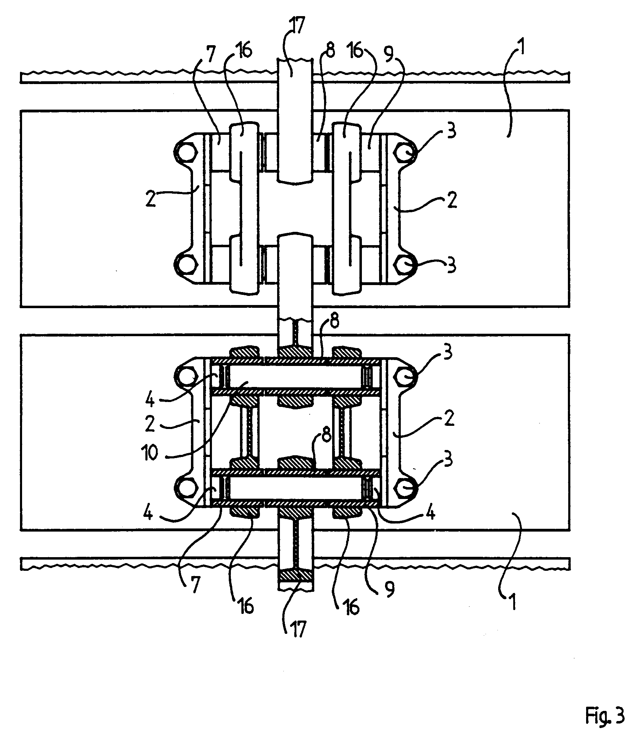

Fig. 3 zeigt eine Ausführungsform, die hinsichtlich der Art der Becheraufhängung der Ausführungsform gemäß Fig. 1 weitgehend entspricht. Anstelle von Laschen aus Flachstahl werden hier gesenkgeschmiedete Außen- und Innenlaschen 16,17 verwendet, und zwar sind die aufeinanderfolgenden Kettenbolzen abwechselnd durch jeweils zwei identische Außenlaschen 16 und eine gegenüber den Außenlaschen 16 verstärkte Innenlasche 17 miteinander verbunden.

Anstelle von aus Flachstahl hergestellten oder gesenkgeschmiedeten Laschen können auch Laschen zum Einsatz gelangen, die aus Paketen gestanzter Bleche bestehen, wobei sich die Paketstärke den jeweiligen Gegebenheiten entsprechend variieren läßt. Desgleichen ist es möglich, die Laschen als Rundstahlglieder auszubilden, wie dies von in der DE-PS 15 56 173 beschriebenen Laschenketten bekannt ist.

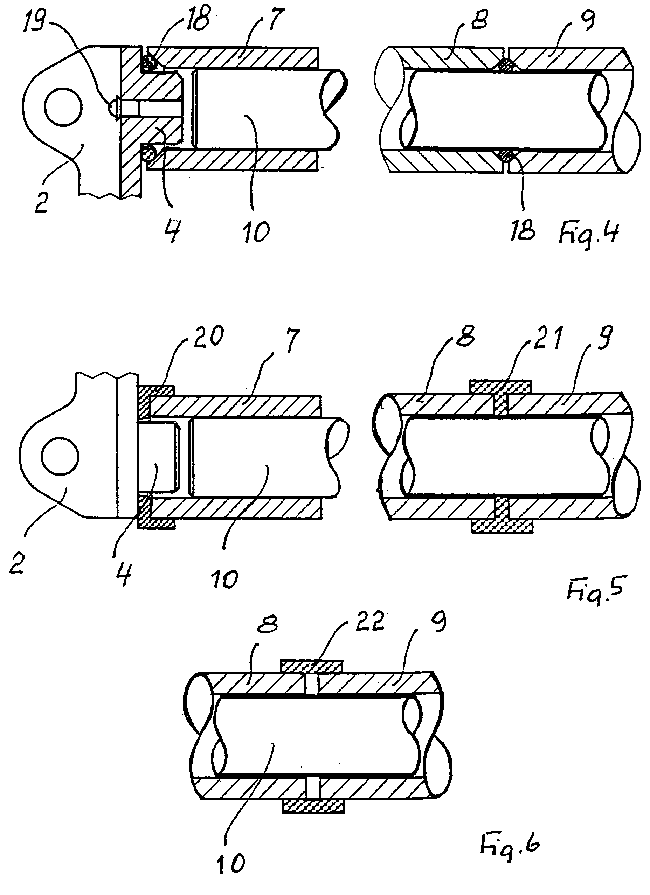

Die Figuren 4 bis 6 zeigen, daß die Lagerbuchsen 7,8,9 eine Abdichtung der Kettenbolzen in ihnen erleichtern. Bei der Ausführung gemäß Figur 4 sind lediglich die Stirnseiten der Lagerbuchsen 7 - 9 leicht einseitig angeschrägt, um als Aufnahmen für O-Ringe 18 genutzt zu werden. Über einen Schmiernippel 19 können die Lagerstellen mit Schmierfett versorgt werden, falls dies als wünschenswert erachtet wird. Bei dem Ausführungsbeispiel gemäß Figur 5 werden spezielle Dichtungsringe 20 und 21 verwendet, während man bei der Ausführungsform gemäß Figur 6 mit einer einfachen Manschette 22 arbeitet.

## Patentansprüche

1. Becherwerk, bei dem die Becher (1) über Anschlußstege (2) an einer durch Kettenbolzen (10) miteinander verbundene Außen- und Innenlaschen (5,6) aufweisenden Laschenkette befestigt sind und bei dem in Querbohrungen der Innenlaschen Lagerbuchsen (8) für die Kettenbolzen eingepreßt sind, **dadurch gekennzeichnet,** daß auch die Außenlaschen (5;16) mit eingepreßten Lagerbuchsen (7,9;13,14) für die Kettenbolzen ausgestattet und über letztere Lagerbuchsen mit den Anschlußstegen (2;11) verbunden sind.

2. Becherwerk nach Anspruch 1, **dadurch gekennzeichnet,** daß die Kettenbolzen (10) drehbar in den Lagerbuchsen (7,8,9) sowohl der Außen- als auch der Innenlaschen (5,6) gelagert sind.

3. Becherwerk nach Anspruch 1 oder 2, **dadurch gekennzeichent**, daß die Lagerbuchsen (7,9) der Außenlaschen (5) mit ihrem einen Ende Lagerzapfen (4) der Anschlußstege (2) und mit ihrem anderen Ende den ihnen jeweils zugeordneten Kettenbolzen (10) umschließen.

4. Becherwerk nach Anspruch 1 oder 2, **dadurch gekennzeichent,** daß die jeweils äußeren Enden der Lagerbuchsen (13,14) der Außenlaschen (5) in Bohrungen (12) der Anschlußstege (11) ragende Lagerzapfen bilden.

5. Becherwerk nach Anspruch 4, **dadurch gekennzeichnet,** daß die Länge der Kettenbolzen (10) größer ist als der Abstand zwischen den Anschlußstegen (11) eines Bechers.

6. Becherwerk nach Anspruch 4 oder 5, **dadurch gekennzeichnet,** daß die nach außen gerichteten Öffnungen der Lagerbuchsen (13,14) der Außenlaschen (5) durch Stopfen (15) verschlossen sind.

7. Becherwerk nach einem oder mehreren der Ansprüche 1 bis 6, **dadurch gekennzeichnet,** daß mindestens die Lagerbuchsen (7,9;13,14) für die Außenlaschen (5;16) jeweils beidseits über die sie umschließenden Querbohrungen der Außenlaschen (5;16) vorstehen.

8. Becherwerk nach einem oder mehreren der Ansprüche 1 bis 7, **dadurch gekennzeichnet,** daß die Kettenbolzen (10) mit Spiel in den Lagerbuchsen (7,8,9;13,8,14) der Außen- und Innenlaschen (5,6;16,17) gelagert sind.

9. Becherwerk nach einem oder mehreren der Ansprüche 1 bis 8, **dadurch gekennzeichnet,** daß die Außen- und Innenlaschen (5,6) identisch ausgebildet sind.

10. Becherwerk nach einem oder mehreren der Ansprüche 1 bis 8, **dadurch gekennzeichnet,** daß die Kettenbolzen (10) im Wechsel durch paarweise angeordnete identische Außenlaschen (16) und einzelne gegenüber den Außenlaschen (16) versetzte Innenlaschen (17) miteinander verbunden sind.

11. Becherwerk nach einem oder mehreren der Ansprüche 1 bis 10, **dadurch gekennzeichnet,** daß sowohl im Bereich der Fugen zwischen den einander zugewandten Stirnseiten der Lagerbuchsen (7,8,9) als auch im Bereich der Fugen zwischen den Stirnseiten der Lagerbuchsen (7,9) und den Anschlußstegen (2) Dichtungen (18,20-22) angeordnet sind.

## Claims

1. A bucket conveyor in which the buckets (1) are fastened by connector webs (2) to a plate link chain exhibiting outer and inner link plates (5,6) interconnected by chain pins (10) and in which, in transverse bores of the inner link plates, there are pressed bearing bushes (8) for the chain pins, wherein also the outer link plates (5; 16) are equipped with pressed-in bearing bushes (7, 9; 13, 14) for the chain pins and are connected by the latter bearing bushes to the connector webs (2; 11).

2. The bucket connveyor as claimed in claim 1, wherein the chain pins (10) are mounted rotatably in the bearing bushes (7, 8, 9) both of the outer and inner link plates (5, 6).

3. The bucket conveyor as claimed in claim 1 or 2, wherein the bearing bushes (7, 9) of the outer link plates (5) enclose with their one end bearing journals (4) of the connector webs (2) and with their other end the chain pin (10) respectively assigned to them.

4. The bucket conveyor as claimed in claim 1 or 2, wherein the respectively outer ends of the bearing bushes (13, 14) of the outer link plates (5) form bearing journals which jut into bores (12) in the connector webs (11).

5. The bucket conveyor as claimed in claim 4, wherein the length of the chain pins (10) is greater than the distance between the connector webs (11) of a bucket.

6. The bucket conveyor as claimed in claim 4 or 5, wherein the outwardly directed openings of the bearing bushes (13, 14) of the outer link plates (5) are closed off by stoppers (15).

7. The bucket conveyor as claimed in one or more of claims 1 to 6, wherein at least the bearing bushes (7, 9; 13, 14) for the outer link plates (5; 16) respectively protrude on both sides over the transverse bores which enclose them of the outer link plates (5; 16).

8. The bucket conveyor as claimed in one or more of claims 1 to 7, wherein the chain pins (10) are mounted with play in the bearing bushes (7, 8, 9; 13, 8, 14) of the outer and inner link plates (5, 6; 16, 17).

9. The bucket conveyor as claimed in one or more of claims 1 to 8, wherein the outer and inner link plates (5, 6) are identically configured.

10. The bucket conveyor as claimed in one or more of claims 1 to 8, wherein the chain pins (10) are alternately interconnected by identical outer link plates (16) arranged in pairs and by individual inner link plates (17) which are offset relative to the outer link plates (16).

11. The bucket conveyor as claimed in one or more of claims 1 to 10, wherein both in the region of the joins between the mutually facing end faces of the bearing bushes (7, 8, 9) and in the region of the joins between the end faces of the bearing bushes (7, 9) and the connector webs (2), seals (18, 22 - 22) are disposed.

## Revendications

1. Transporteur à godets, dans lequel les godets (1) sont fixés au moyen de barrettes de raccordement (2) à une chaîne articulée comportant des plaques extérieures et intérieures (5,6) reliées entre elles par des tourillons de chaîne (10), et dans lequel des coussinets (8) pour les tourillons de chaîne sont insérés à force dans des perçages transversaux des plaques intérieures, caractérisé en ce que les plaques extérieures (5;16) sont également équipées de coussinets (7,9;13,14) insérés à force, prévus pour les tourillons de chaîne et sont reliés aux barrettes de raccordement (2;11) par l'intermédiaire de ces coussinets.

2. Transporteur à godets selon la revendication 1, caractérisé en ce que les tourillons de chaîne (10) sont montés de manière à pouvoir tourner dans les coussinets (7,8,9) aussi bien des plaques extérieures que des plaques intérieures (5,6).

3. Transporteur à godets selon la revendication 1 ou 2, caractérisé en ce que les coussinets (7,9) des plaques extérieures (5) entourent, par une de leurs extrémités, des tourillons (4) des barrettes de raccordement (2) et, par leur autre extrémité, les tourillons de chaîne (10) qui leur sont respectivement associés.

4. Transporteur à godets selon la revendication 1 ou 2, caractérisé en ce que les extrémités extérieures respectives des coussinets (13,14) des plaques extérieures (5) forment des tourillons, qui pénètrent dans des perçages (12) des barrettes de raccordement (11).

5. Transporteur à godets selon la revendication 4, caractérisé en ce que la longueur des tourillons de chaîne (10) est supérieure à la distance entre les barrettes de raccordement (11) d'un godet.

6. Transporteur à godets selon la revendication 4 ou 5, caractérisé en ce que les ouvertures, qui sont dirigées vers l'extérieur, des coussinets (13,14) des plaques extérieures (5) sont fermées par des bouchons (15).

7. Transporteur à godets selon une ou plusieurs des revendications 1 à 6, caractérisé en ce qu'au moins les coussinets (7,9;13,14) pour les plaques extérieures (5;16) font saillie respectivement des deux côtés au-delà des perçages transversaux, qui les entourent, des plaques extérieures (5,16).

8. Transporteur à godets selon une ou plusieurs des revendications 1 à 7, caractérisé en ce que les tourillons de chaîne (10) sont montés avec un certain jeu dans les coussinets (7,8,9;13,8,14) des plaques extérieures et des plaques intérieures (5,6;16,17).

9. Transporteur à godets selon une ou plusieurs des revendications 1 à 8, caractérisé en ce que les plaques extérieures et les plaques intérieures (5,6) sont identiques.

10. Transporteur à godets selon une ou plusieurs des revendications 1 à 8, caractérisé en ce que les tourillons de chaîne (10) sont reliés entre eux alternativement par des plaques extérieures identiques (16), disposées par couples, et par des plaques intérieures individuelles (17) décalées par rapport aux plaques extérieures (16).

11. Transporteur à godets selon une ou plusieurs des revendications 1 à 10, caractérisé en ce que les garnitures d'étanchéité (18,20-22) sont disposées aussi bien dans la zone des joints entre les faces frontales, qui se font face, des coussinets (7,8,9) que dans la zone des joints entre les faces frontales des coussinets (7,9) et les barrettes de raccordement (2).
